# EUROPEAN PATENT SPECIFICATION

(11) **EP 3 794 710 B1**
(45) Date of publication and mention of the grant of the patent: **05.03.2025**
(21) Application number: 19728283.3
(22) Date of filing: 17.05.2019
(51) Int. Cl.: H02J 50/20

(54) **ENERGY HARVESTING SYSTEMS AND METHODS**
ENERGIEGEWINNUNGSSYSTEME UND VERFAHREN
SYSTÈMES ET PROCÉDÉS DE COLLECTE D'ÉNERGIE

(30) Priority: 18.05.2018 US 201862673360 P
(43) Date of publication of application: 24.03.2021
(73) Proprietor: Avery Dennison Retail Information Services LLC, Mentor, OH 44060 (US)
(72) Inventor: FORSTER, Ian, Chelmsford Essex CM1 6LA (GB)
(74) Representative: HGF
(86) International application number: PCT/US2019/032837
(87) International publication number: WO 2019/222608

(56) References cited:
- WO-A2-2011/160007
- US-A1- 2007 109 121
- US-A1- 2016 134 150

## Description

### TECHNICAL FIELD

The subject application generally relates to capturing radio-frequency energy for use in powering devices and, more specifically, to harvesting radio-frequency energy available in an environment to power low energy devices and adapt behavior of those devices based on available energy.

### BACKGROUND

Retail environments often experience moderate to high levels of ambient radio-frequency energy from various sources. For example, consumers and workers may carry smartphones into a store that operate using one or more frequency bands, such as the 700 MHz LTE band. Stores may also have a WiFi network or be in proximity to a nearby WiFi network operating on the 2.4 GHz or 5 GHz frequencies. Retail environments may also have Bluetooth beacons, or Bluetooth low energy (LE) systems, to inform consumers through mobile marketing about available items of commerce available for purchase, or use Electronic Article Surveillance ("EAS") systems operating at 8.2 MHz for loss prevention. Inventory control in retail environments can also use radio frequencies through the use of Radio Frequency Identification ("RFID") reader systems and RFID tags that are attached to items for sale. RFID systems can operate at ultra-high frequencies, for example between 860 MHz to 960 MHz.
US 2016/134150 A1 discloses a system configured to self-harvest radio frequency signals transmitted by an associated wireless device wherein the system converts the collected radio frequency signals to a direct current signal compatible with charging requirements of the wireless device in order to supplement an electrical charge of a battery electrically connected to the wireless device. US 2007/109121 A1 discloses a system and device for harvesting various frequencies and polarizations of ambient radio frequency electromagnetic energy for making a passive sensor into an autonomous passive sensor adapted to collect and store data with time-stamping and computation when necessary even when an interrogating radio frequency identification (RFID) reader is not present. The source of ambient RF EM energy may include WiFi and/or cellular telephone base stations and the system and device disclosed allows for the recharging of energy storage units in active and battery assisted passive devices.
WO 2011/160007 A2 discloses methods, apparatuses, and systems for converting energy from electro-magnetic radiation into electric power using a simultaneous collector of ambient radio frequencies circuit. This is achieved by capturing EM radiation from a plurality of ambient signals using an array of antennas where each signal has a resonant frequency and aggregating the ambient signals to generate an aggregated signal having a single frequency with greater AC power than the AC power of each of the plurality of ambient signals individually. The aggregated signal is then converted into useable electric power using a rectifying circuit.

### SUMMARY

Aspects of the invention are disclosed in independent claim 1 and 7.

According to certain embodiments, an energy harvesting system includes one or more antennas configured to receive one or more radio frequency signals from a source and an energy harvester configured to derive energy from the one or more radio frequency signals to power a power consuming device. The energy harvesting system can include a power integrator that stores the energy until needed by the power consuming device. The energy harvester can also be configured to extract data encoded in the radio frequency signals and transmit the data to the power consuming device, which can change its operation mode based on the received power or data. The energy harvesting system uses data communications to control power delivery from the source of the radio frequency signal based on the needs of the power consuming device.

In certain embodiments, an energy harvester includes a plurality of antennas and an energy harvester. The antennas are each tuned to distinct frequencies associated with different types of sources and configured to receive radio frequency signals from one or more sources substantially around the tuned frequencies. The energy harvester is configured to receive the radio frequency signals from the antennas, extract energy from the received signals, and provide power from the extracted energy to a power consuming device. The power consuming device is configured to perform one or more operations. Example sources can include radio frequency identification systems, electronic article surveillance systems, Bluetooth systems, WiFi networks, cellular networks, and continuous wave signal generators. For instance, the energy harvester, in one embodiment, could accumulate power from one or more local sources and re-transmit a signal on the same radio frequency. For instance, the extracted energy, such as from WiFi or Bluetooth sources, may transmit a Bluetooth beacon signal associated with the same radio signal.

According to some embodiments, a method includes receiving one or more radio frequency signals from one or more antennas, where each antenna may be tuned to a distinct frequency, extracting energy from the signals by an energy harvester, and providing power to a power consuming device from power derived from the extracted energy. The power consuming device is configured to perform one or more operations unassociated with the radio frequency signal. The method can include changing operation modes on the power consuming device based on the power received from the energy harvester. The energy harvester uses data communications to control power delivery from the source of the radio frequency signal based on the needs of the power consuming device.

### BRIEF DESCRIPTION OF THE DRAWINGS

Various embodiments will become better understood with regard to the following description, appended claims, and accompanying drawings.
FIG. 1 depicts a first embodiment of an energy harvesting system.
FIG. 2 depicts a second embodiment of an energy harvesting system.
FIG. 3 depicts a first use case of an energy harvesting system.
FIG. 4 depicts a third embodiment of an energy harvesting system.
FIG. 5 depicts a fourth embodiment of an energy harvesting system.
FIG. 6 depicts a second use case of an energy harvesting system.
FIG. 7 depicts a fifth embodiment of an energy harvesting system.
FIG. 8 depicts a sixth embodiment of an energy harvesting system.
FIG. 9 depicts a seventh embodiment of an energy harvesting system.

### DETAILED DESCRIPTION

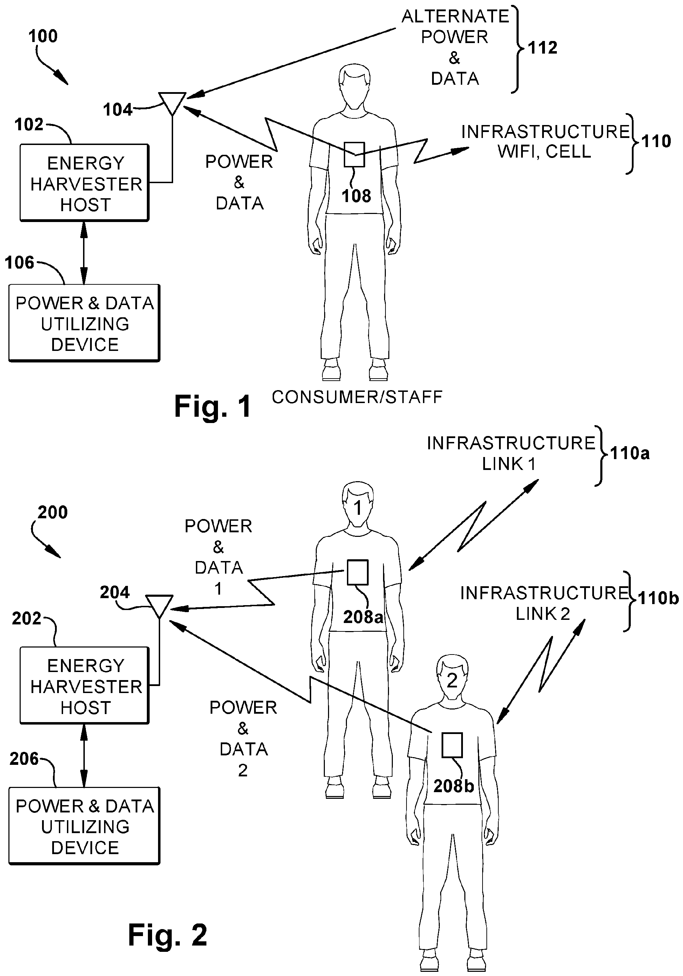

The systems and methods disclosed herein are described in detail by way of examples and with reference to FIGS. 1 to 9. It will be appreciated that modifications to disclosed and described examples, arrangements, configurations, components, elements, apparatuses, devices methods, systems, etc. can suitably be made and may be desired for a specific application. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such.

The systems and methods disclosed herein describe different modalities for capturing energy from nearby radio frequency emitting sources and the present invention is not limited to any one particular modality. Although the systems and methods described herein are particularly applicable to radio frequency emitted by RFID, EAS, WiFi, Bluetooth, and cellular devices, the system and methods can be adapted for use with other types of radiant energy. For example, any suitable source of radio frequency transmissions can be used.

Referring to FIG. 1, an illustration of an energy harvesting system 100 is presented. The energy harvesting system 100 includes an energy harvester 102, also referred to as an energy harvester host, that receives a radio frequency signal through at least one antenna 104. The energy harvester 102 can receive radio frequency signals from mobile sources, such as a smartphone 108, carried by a consumer or by staff. The radio frequency signal harvested by the energy harvester 102 can include data that is embedded, or encoded, in a carrier signal from the mobile device, or any radio transmission that can be considered as a carrier, such as a signal at a specific frequency- 900MHz- and a data modulation. All transmissions contain a carrier of some sort so that the total transmission is a carrier and some form of data modulation. All of the radio signal captured by the energy harvester 102 will be a modulated carrier. For example, a nearby smartphone 108 may communicate with infrastructure 110, such as a WiFi network or a cellular network, or a nearby Bluetooth LE beacon. If power drops off by approximately a square law with distance from the emitter for far field coupling and the cube of the distance from the emitter for near field coupling, the nearby smartphone 108 is often a stronger source of radio frequency signals for the energy harvester 102 than the infrastructure 110 itself. For example, if the smartphone 108 is at 1m and the infrastructure 110 is 8m from the energy harvester 102, and the smartphone 108 and infrastructure 110 are transmitting the same power and frequency, the power arriving at the energy harvester 102 from the infrastructure 110 will be approximately 18dB less than that from the smartphone 108. The energy harvester 102 can also harvest energy from alternative sources 112, which can include the infrastructure 110 or other sources such as RFID reader systems or other devices as described in greater detail below.

An example energy harvester 102 can comprise suitable circuits and electronics for deriving energy from radio frequency signals as would be understood in the art and providing power to a power consuming device 106. In this example, the energy harvester 102 is converting an AC signal (the RF energy received) to a DC signal to power the consuming device- a rectifier. Rectification is achieved using a device that has a different forward and reverse path conduction for a voltage that is applied to it depending on which connection has a higher voltage than the other. A well-known example of this is a diode, which is a single diode and a capacitor that provides a smooth DC supply in order to take an RF AC signal and create a DC supply. The use of multiple diodes can improve the efficiency of the rectifier. For example, a structure with multiple diodes and capacitors, called a Cockroft Waltom multiplier, will produce a DC supply greater than the peak voltage of the RF AC signal. Other structures can act as rectifiers. For example, field effect transistors with the gate connected to the source or drain (depending on the type of FET) act as switches to pass or block the path through depending on whether the differential voltage is positive between source and drain or negative.

By way of analogy, an RFID transponder includes an antenna and/or tuning loop that is coupled to an RFID chip. The RFID chip includes electronics that accumulate energy from RF signals received through the antenna. The RFID chip turns on and transmits back a response code once the RFID chip receives sufficient power (e.g., in one embodiment, approximately 10µW depending on the chip type) from an RFID reader. The power received at the RFID from a reader depends on the emitted power and distance between tag and readers. Similarly, the energy harvester 102 can derive energy from RF signals emitted by RFID reader systems using similar antenna structures and electronics, but instead of using the power to allow an RFID chip to respond with a code, the energy harvester 102 can deliver power, or power and data, to a power consuming device 106.

Similar structures and electronics can be used to derive energy from radio frequency signals from WiFi networks, Bluetooth systems, EAS systems, cellular networks, smart devices using radio frequencies such as Zigbee devices, and other sources of radio frequency energy. Advantageously, the energy harvester 102 can harvest RF signals from one kind of system and use captured energy for powering a power consuming device 106 that performs operations unassociated with the RF signals.

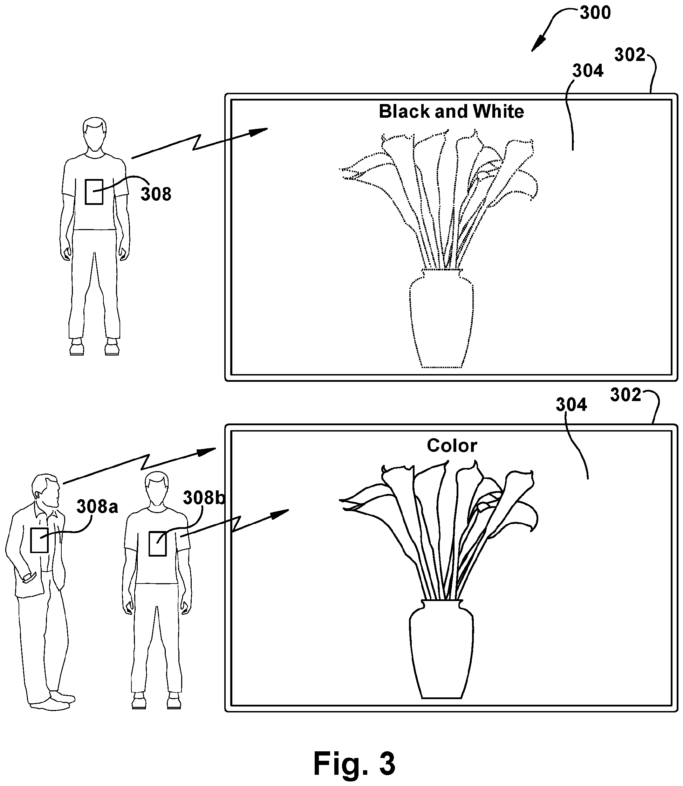

Example power consuming devices 106, or power utilizing devices, can include, but are not limited to, Bluetooth LE beacons, WiFi transceivers, WiGig and chipe transceivers, active transmitters, RFID transponders, lighting modules, optical indicators, for example to alert consumers to the presence of consumable items available for purchase, wireless point of sale terminals, sensors such as environmental sensors, speakers or other sound generating elements, touch interfaces for consumers to interact with systems such as the energy harvesting system 100, or a display. For example, the display can be a power consuming device 106 that, in one embodiment, is powered by an energy harvester 102. In certain embodiments, the display can change modalities based on the power received from the energy harvester 102, as described below in greater detail for Figure 3.

In one embodiment, the display will show a color picture with video when a customer is nearby to engage effectively, but will display a static picture or no picture when no person or object is present, allowing the unit to integrate and store energy for the next operation. In another embodiment, the information displayed is adapted to a nearby consumer based on anonymous identification of needs. For example, if a mobile device carried by a person indicates that they have poor eyesight, the display may change to a high contrast simplified text, for example a larger font with black writing on a yellow background. In the event that multiple consumers are in proximity, the display may cycle though displays better suited to each person. The selection of display options, as before, will depend on the availability of energy. The display can change what is displayed on the screen based on the power, or power and data, received from the energy harvester 102. In certain embodiments, the data may come from the infrastructure 110, such as a WiFi network in a store, or from the smartphone 108 through its link to infrastructure 110 such as a WiFi or cellular network.

Referring to FIG. 2, an illustration of a second embodiment of an energy harvesting system 200 is presented. The energy harvesting system 200 includes an energy harvester 202 that receives radio frequency signals through one or more antennas 204. The energy harvester 202 is not limited as to how it receives RF energy and can receive radio frequency energy from multiple sources. For example, the energy harvester 202 can receive signals from a first smartphone 208a carried by a first person who uses first infrastructure 110a associated with a first cellular carrier. The energy harvester 202 also can concurrently or substantially concurrently receive signals from a second smartphone 208b carried by a second person who uses second infrastructure 110b associated with a second cellular carrier using a different frequency than the first cellular carrier. The power available to the power consuming device 206 from the energy harvester 202 can be greater than if the energy harvester 202 only harvested energy from signals from only one of the first or second smartphones 208a, 208b. Similarly, more or different data can be made available to the power consuming device 206 by the energy harvester 202 by harvesting radio frequency signals from both first and second smartphones 208a, 208b.

Referring to FIG. 3, an illustration of a display system 300 powered by harvested energy is presented. In certain embodiments, the display 302 can change display modes based on the power received from an associated energy harvesting system (not shown, see for example Figure 2 above). For example, as illustrated in the top image, the display 302 can display a single black and white image or a sequence of static images on the screen 304 when only a single smartphone 308 provides radio frequency signals that can be harvested for energy. When two or more smartphones 308a, 308b are present, the display 302 can switch to a color image or a motion video clip on the screen 304 using the additional received power from two or more smartphones 308a, 308b harvested by the associated energy harvesting system.

In certain embodiments, the display 302 can be a suitable low power display, such as an e-ink display that requires power only to change what is being displayed on the screen 304, but otherwise can maintain the same displayed image on the screen 304 without consuming power. The e-ink display can change what is being displayed based on the amount of power received from the energy harvester system, or based on both the power and data received from the energy harvesting system. For example, the data may come from the infrastructure, such as a WiFi network in a store, or from a smartphone 308 carried by a person through its link to infrastructure such as a WiFi or as as illustrated in the top image, such as a cellular network.

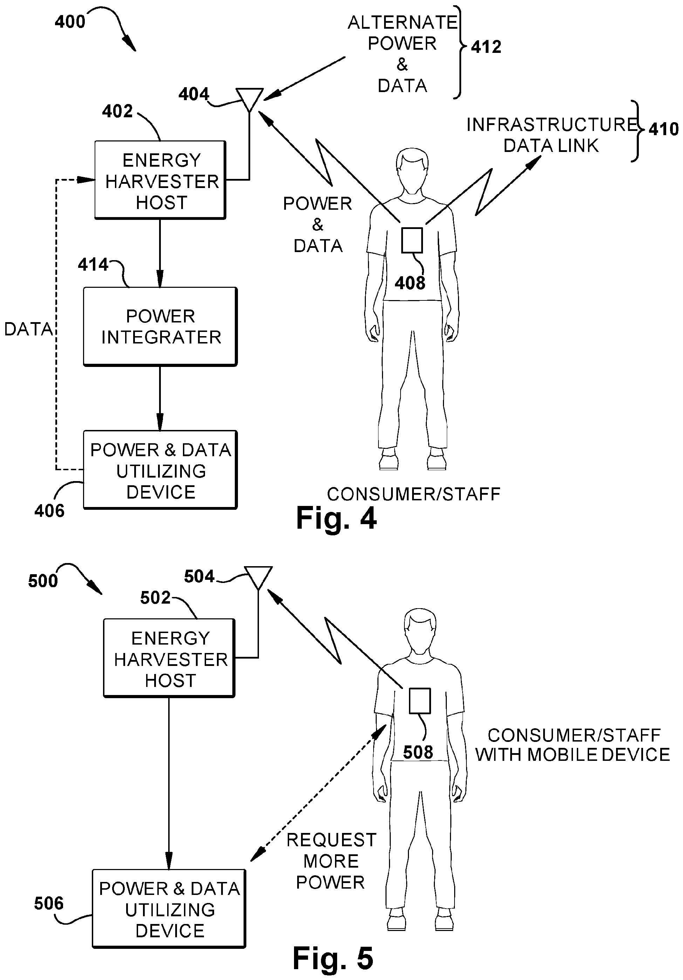

Referring to FIG. 4, an illustration of a third embodiment of an energy harvesting system 400 is presented. The energy harvesting system 400 includes an energy harvester 402 that receives radio frequency signals through one or more antennas 404. The energy harvester 402 can receive radio frequency signals from multiple sources, for example a smartphone 408 carried by a customer or staff that is connected to infrastructure 410, such as a cellular service provider. The energy harvest 402 can also receive radio frequency signals from alternative sources 412, such as the infrastructure 410. The energy harvesting system 400 includes a power integrator 414 comprising suitable electronics such as a capacitor for storing and releasing power as needed by the power consuming device 406. Data can optionally be received from the energy harvester 402 by the power consuming device 406. An example power consuming device 406 can include a Bluetooth LE beacon, which can adapt the power and repeat rate of the beacon based on the amount of power integrated by the power integrator 414 from one or more sources. For example, when multiple consumers are present, there are more sources of signals available for harvesting energy by the energy harvester 402 and the Bluetooth LE beacon can increase the power or repeat rate of the beacon to capture the interest of consumers nearby. Additionally, when multiple consumers are present, those consumers also may block some of the Bluetooth signal, limiting the range of the Bluetooth LE beacon, and thus increasing the power would be advantageous.

Referring to FIG. 5, an illustration of a fourth embodiment of an energy harvesting system 500 is presented. The energy harvesting system 500 includes an energy harvester 502 that receives radio frequency signals through one or more antennas 504. The energy harvester 502 can receive radio frequency signals from one or multiple sources. For example, the energy harvester 502 can receive signals from a smartphone 508 carried by a consumer. The energy harvesting system 500 can utilize a data link established with the consumer's smartphone 508 to request that the smartphone 508 use more power, for example by transmitting data via a local WiFi network or cellular network, enabling Bluetooth on the smartphone 508, and so forth. In certain embodiments, the consumer can make a choice about how much power to provide to the energy harvesting system 500. For example, the consumer can be presented with an additional product discount, entry into a prize winning contest, or another incentive to use more power that can be harvested by the energy harvester 502. When multiple consumers are present, the requests for power can be prioritized, for example based on consumer choices or battery levels reported by the smartphones 508. Advantageously, the energy harvester 502 can harvest RF signals from one kind of system, such as a smartphone 508, and use captured energy for powering a power consuming device 506 that performs operations unassociated with the RF signals.

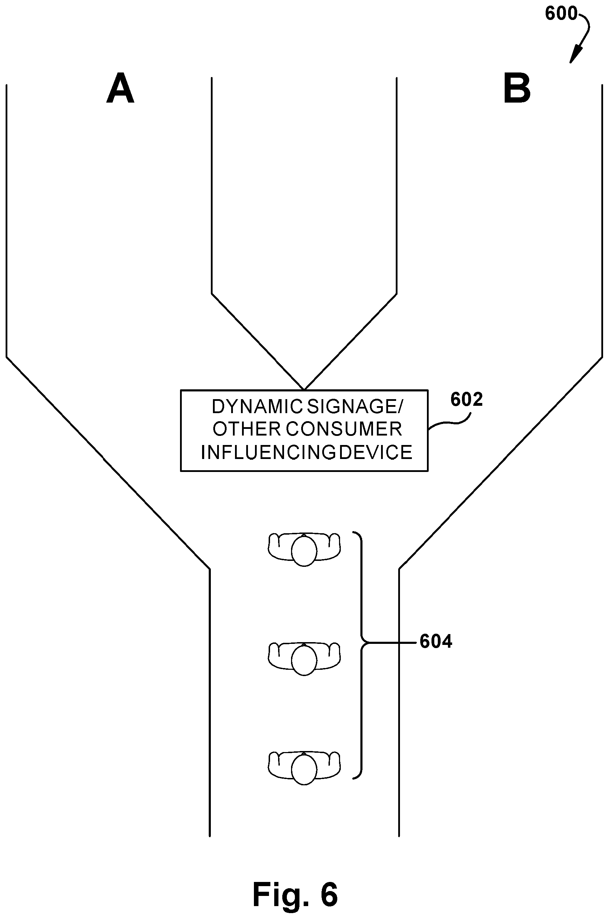

Referring to FIG. 6, an illustration of a dynamic signage system 600 powered by harvested energy is presented. A display 602, for example a display as described above for Figure 3, can dynamically change what is displayed on the screen based on whether power may be needed in one area of a facility, marked by the letter A, or a different area of a facility, marked by the letter B. For example, if the facility is a store with aisles, A might be a first aisle while B is an adjacent aisle. Consumers 604 can be targeted with discounts, marketing messages, or other incentives to encourage some of the consumers 604 to move toward one of the areas, A or B, that is in need of power.

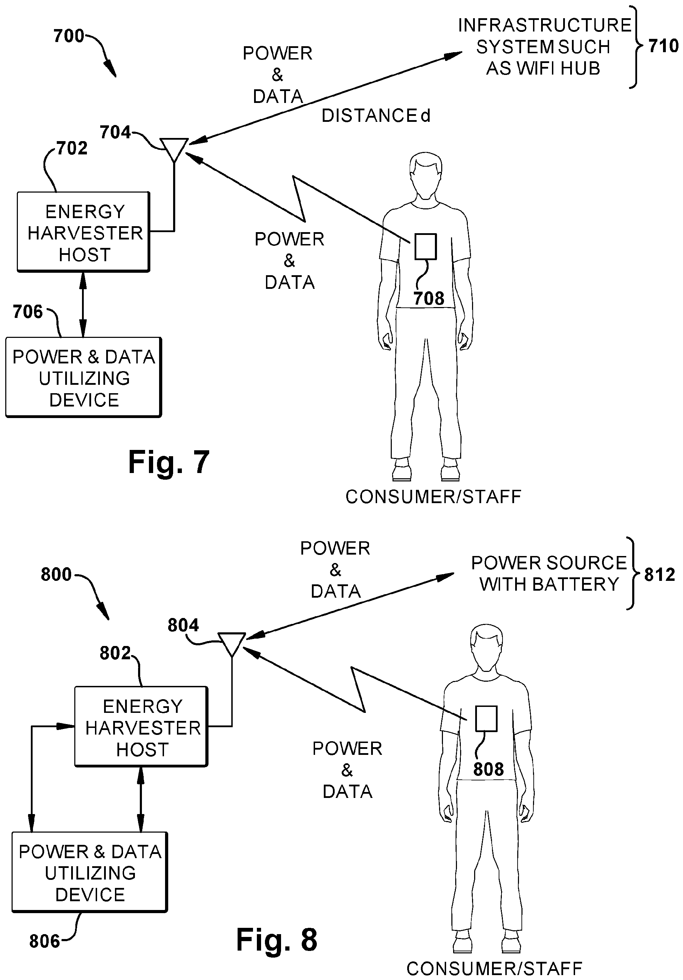

Referring to FIG. 7, an illustration of a fifth embodiment of an energy harvesting system 700 is presented. The energy harvesting system 700 includes an energy harvester 702 that receives radio frequency signals through one or more antennas 704. The energy harvester 702 can receive radio frequency signals from multiple sources. For example, the energy harvester 702 can receive signals from a smartphone 708 carried by a consumer. Additionally, the energy harvesting system 700 can receive power from appropriately placed infrastructure 710. For example, a WiFi hub can be placed at a distance d from the energy harvesting system 700 to increase the amount of power available to the energy harvesting system 700. Infrastructure 710, such as WiFi hubs, can generally be placed in any number of physical locations in a facility to provide the desired network without substantially impacting network performance. Therefore, the placement of infrastructure 710 can be optimized for the energy harvesting system 710 while having a minimal impact on a WiFi network or other systems. Energy captured from RF signals harvested from the energy harvester 702 can be used for powering a power consuming device 706.

Referring to FIG. 8, an illustration of a sixth embodiment of an energy harvesting system 800 is presented. The energy harvesting system 800 includes an energy harvester 802 that receives radio frequency signals through one or more antennas 804. The energy harvester 802 can receive radio frequency signals from multiple sources. For example, the energy harvester 802 can receive signals from a smartphone 808 carried by a consumer or staff. Additionally, the energy harvesting system 800 can receive power from a local power source 812. Energy harvested from the energy harvester 802 can be used for powering a power consuming device 806.

The power source 812 can be a low cost, controllable power source for powering one or more nearby energy harvesting systems 800. The power source 812 can be a simple transmitter of a continuous wave signal set to a frequency suitable for energy harvesting by the energy harvesting system 800. For example, in certain embodiment the power source 812 can emit a substantially continuous unmodulated carrier signal. In related embodiments, the signal can include data modulated with the carrier signal, for example data identifying the power source 812 or the battery level of the power source. In certain embodiments, the power source 812 can be battery powered. In certain embodiments, the energy harvesting system 800 only requests power from the power source 812 as needed, for example to conserve battery power. The command data link from the energy harvesting system 800 to the power source 812 can be a direct data link, use an available infrastructure system (not shown, see for example Figure 7), or be established via a smartphone 808 that connects to a cellular network or local WiFi network. In certain embodiments, if the energy harvesting system 800 is within range of multiple power sources 812, the requests for power can be based on the relative signal strength of each power source 812, the respective battery levels of the power sources 812, or a round-robin scheduling algorithm or other algorithms among other suitable methodologies.

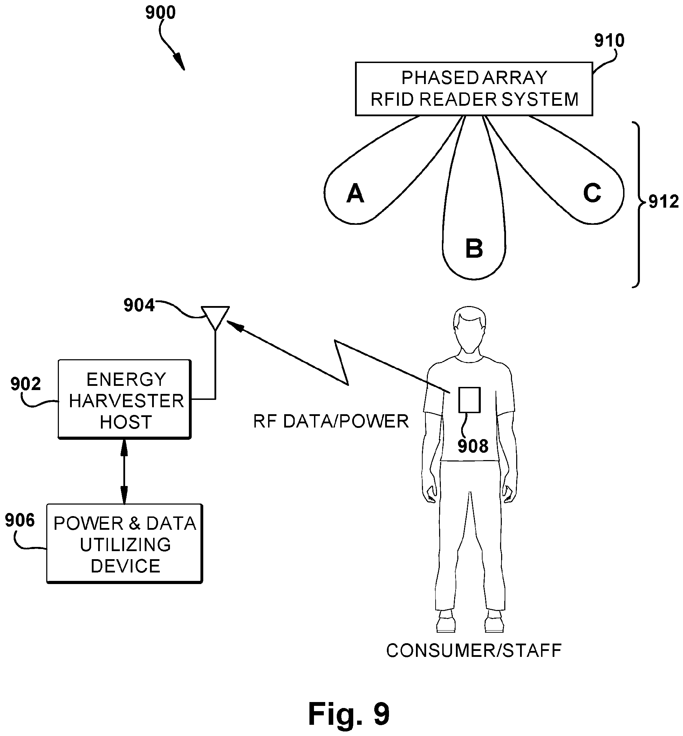

Referring to FIG. 9, an illustration of a seventh embodiment of an energy harvesting system 900 is presented. The energy harvesting system 900 includes an energy harvester 902 that receives radio frequency signals through one or more antennas 904. The energy harvester 902 can receive radio frequency signals from multiple sources. For example, the energy harvester 902 can receive signals from a smartphone 908 carried by a consumer. Additionally, the energy harvesting system 900 can receive power from a phase-array RFID reader system 910. Energy harvested from the energy harvester 902 can be used for powering a power consuming device 906.

The phase-array RFID reader system 910 can be configured to direct power in various directions to read nearby RFID tags, for example as illustrated by beams 912 labeled A, B, and C. As schematically illustrated, the beam 912 labeled A would provide more power to the energy harvesting system 900 because the beam 912 labeled A is directed at antenna, whereas beams 912 labeled B and C are not directed as directly to antenna 904. In general, the phase-array RFID reader system 910 could be configured to provide power equally in various directions or in directions based on the desired operational performance for reading RFID tags. In certain embodiments, the phase-array RFID reader system 910 can be configured to periodically direct energy to the beam 912 labeled A to provide energy to the energy harvesting system 900, which may slightly degrade RFID tag reading performance. In certain embodiments, the phase-array RFID reader system 910 can be configured to periodically direct more energy to the beam 912 labeled A than to the beams 912 labeled Band C. In certain embodiments, the phase-array RFID reader system 910 can be configured to respond to requests from the energy harvesting system 900 to direct energy to the beam 912 labeled A to provide more energy to the energy harvesting system 900.

The energy harvesting systems described herein illustrate example methods of harvesting energy that can be used in a multitude of different environments, such as retail environments. Energy can be harvested from any number of suitable signal sources such as mobile devices, WiFi hubs, RFID readers, local power sources, and so forth. The energy harvesting systems use data communications to control power delivery from sources based on the needs of power consuming devices. Sources can be prioritized to efficiently maximize power delivery to energy harvesting systems. Power consuming devices can change operational modes based on the power received from different sources. Among other possible uses, digital signage can be manipulated to affect the behavior of consumers to direct the consumers to areas where power may be needed.

The values disclosed herein are not to be understood as being strictly limited to the exact numerical values recited. Instead, unless otherwise specified, each such dimension is intended to mean both the recited value and a functionally equivalent range surrounding that value. It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

The foregoing description of embodiments and examples has been presented for purposes of description. It is not intended to be exhaustive or limiting to the forms described. Numerous modifications are possible in light of the above teachings. Some of those modifications have been discussed and others will be understood by those skilled in the art. The embodiments were chosen and described for illustration of various embodiments. The scope is, of course, not limited to the examples or embodiments set forth herein, but can be employed in any number of applications and equivalent articles by those of ordinary skill in the art.

## Claims

1. An energy harvesting system (100, 200, 400, 500, 700, 800. 900), comprising:
an antenna (104, 204, 404, 504, 704, 804, 904) configured to receive a radio frequency signal from a source (108, 112, 208a, 208b, 308, 308a, 308b, 408, 412, 508, 708, 808, 812, 908); and
an energy harvester (102, 202, 402, 502, 702, 802, 902) configured to receive the radio frequency signal from the antenna (104, 204, 404, 504, 704, 804, 904) and provide power, derived from energy in the radio frequency signal, to a power consuming device (106, 206, 406, 506, 706, 806, 906) configured to perform one or more operations unassociated with the radio frequency signal,
**characterized by** the energy harvesting system (100, 200, 400, 500, 700, 800, 900) using data communications to control power delivery from the source (108, 112, 208a, 208b, 308, 308a, 308b, 408, 412, 508, 708, 808, 812, 908) of the radio frequency signal based on the needs of the power consuming device (106, 206, 406, 506, 706, 806, 906).

2. The energy harvesting system (100, 200, 400, 500, 700, 800, 900) of claim 1, further comprising:
a plurality of antennas (104, 204, 404, 504, 704, 804, 904) each tuned to a distinct frequency and each configured to receive a radio frequency signal substantially around the distinct frequency,
wherein the energy harvester (102, 202, 402, 502, 702, 802, 902) is further configured to derive energy from each of the radio frequency signals of each of the plurality of antennas (104, 204, 404, 504, 704, 804, 904).

3. The energy harvesting system (100, 200, 400, 500, 700, 800, 900) of claim 1, wherein the source (108, 112, 208a, 208b, 308, 308a, 308b, 408, 412, 508, 708, 808, 812, 908) is a battery-powered continuous wave signal generator (812), and wherein the power consuming device (106, 206, 406, 506, 706, 806, 906) is configured to send data to cycle the power of the battery-powered continuous wave signal generator when the power consuming device (106, 206, 406, 506, 706, 806, 906) requires additional power.

4. The energy harvesting system (100, 200, 400, 500, 700, 800, 900) of claim 1, wherein the source (108, 112, 208a, 208b, 308, 308a, 308b, 408, 412, 508, 708, 808, 812, 908) is a phased array radio frequency identification system (910), and wherein the power consuming device (106, 206, 406, 506, 706, 806, 906) is configured to send data to instruct the phased array radio frequency identification system to direct more energy towards the energy harvesting system.

5. The energy harvesting system (100, 200, 400, 500, 700, 800, 900) of claim 1, further comprising:
a power consuming device (106, 206, 406, 506, 706, 806, 906) configured to change an operational mode based at least in part on an amount of power received from the energy harvester (102, 202, 402, 502, 702, 802, 902).

6. The energy harvesting system (100, 200, 400, 500, 700, 800, 900) of claim 1, wherein the sources (108, 112, 208a, 208b, 308, 308a, 308b, 408, 412, 508, 708, 808, 812, 908) of radio frequency signals are prioritized to efficiently maximize power delivery to the energy harvesting system.

7. A method, comprising:
receiving, via one or more antennas (104, 204, 404, 504, 704, 804, 904) each tuned to a distinct frequency, one or more radio frequency signals from a source (108, 112, 208a, 208b, 308, 308a, 308b, 408, 412, 508, 708, 808, 812, 908);
extracting, by an energy harvester (102, 202, 402, 502, 702, 802, 902), energy from the one or more radio frequency signals; and
providing, by the energy harvester (102, 202, 402, 502, 702, 802, 902), power derived from the extracted energy to a power consuming device (106, 206, 406, 506, 706, 806, 906) configured to perform one or more operations unassociated with the radio frequency signal,
**characterized in that** the energy harvester (102, 202, 402, 502, 702, 802, 902) uses data communications to control power delivery from the source (108, 112, 208a, 208b, 308, 308a, 308b, 408, 412, 508, 708, 808, 812, 908) of the radio frequency signal based on the needs of the power consuming device (106, 206, 406, 506, 706, 806, 906).

8. The method of claim 7, further comprising:
changing, by the power consuming device (106, 206, 406, 506, 706, 806, 906), an operational mode based at least in part on the power received from the energy harvester (102, 202, 402, 502, 702, 802, 902).

## Patentansprüche

1. Energiegewinnungssystem (100, 200, 400, 500, 700, 800, 900), umfassend:
eine Antenne (104, 204, 404, 504, 704, 804, 904), die dazu konfiguriert ist, ein Funkfrequenzsignal von einer Quelle (108, 112, 208a, 208b, 308, 308a, 308b, 408, 412, 508, 708, 808, 812, 908) zu empfangen; und
eine Energiegewinnungseinrichtung (102, 202, 402, 502, 702, 802, 902), die dazu konfiguriert ist, das Funkfrequenzsignal von der Antenne (104, 204, 404, 504, 704, 804, 904) zu empfangen und aus der Energie in dem Funkfrequenzsignal abgeleiteten Strom an einer stromverbrauchenden Vorrichtung (106, 206, 406, 506, 706, 806, 906) bereitzustellen, die dazu konfiguriert ist, eine oder mehrere Operationen durchzuführen, die nicht mit dem Funkfrequenzsignal verbunden sind,
**gekennzeichnet dadurch, dass** das Energiegewinnungssystem (100, 200, 400, 500, 700, 800, 900) Datenkommunikationen nutzt, um die Stromabgabe von der Quelle (108, 112, 208a, 208b, 308, 308a, 308b, 408, 412, 508, 708, 808, 812, 908) des Funkfrequenzsignals auf Grundlage von Anforderungen der stromverbrauchenden Vorrichtung (106, 206, 406, 506, 706, 806, 906) zu steuern.

2. Energiegewinnungssystem (100, 200, 400, 500, 700, 800, 900) nach Anspruch 1, ferner umfassend:
eine Vielzahl von Antennen (104, 204, 404, 504, 704, 804, 904), die jeweils auf eine bestimmte Frequenz abgestimmt sind und jeweils dazu konfiguriert sind, ein Funkfrequenzsignal zu empfangen, das im Wesentlichen um die bestimmte Frequenz herum liegt,
wobei die Energiegewinnungseinrichtung (102, 202, 402, 502, 702, 802, 902) ferner dazu konfiguriert ist, Energie aus jedem der Funkfrequenzsignale jeder der Vielzahl von Antennen (104, 204, 404, 504, 704, 804, 904) abzuleiten.

3. Energiegewinnungssystem (100, 200, 400, 500, 700, 800, 900) nach Anspruch 1, wobei die Quelle (108, 112, 208a, 208b, 308, 308a, 308b, 408, 412, 508, 708, 808, 812, 908) ein batteriebetriebener Generator (812) für kontinuierliche Wellensignale ist und wobei die stromverbrauchende Vorrichtung (106, 206, 406, 506, 706, 806, 906) dazu konfiguriert ist, Daten zu senden, um den Stroms des batteriebetriebenen Generators für kontinuierliche Wellensignale zyklisch einzuschalten, wenn die stromverbrauchende Vorrichtung (106, 206, 406, 506, 706, 806, 906) zusätzlichen Strom benötigt.

4. Energiegewinnungssystem (100, 200, 400, 500, 700, 800, 900) nach Anspruch 1, wobei die Quelle (108, 112, 208a, 208b, 308, 308a, 308b, 408, 412, 508, 708, 808, 812, 908) ein Phased-Array-Funkfrequenzidentifikationssystem (910) ist und wobei die stromverbrauchende Vorrichtung (106, 206, 406, 506, 706, 806, 906) dazu konfiguriert ist, Daten zu senden, um das Phased-Array-Funkfrequenzidentifikationssystem anzuweisen, mehr Energie in Richtung des Energiegewinnungssystems zu leiten.

5. Energiegewinnungssystem (100, 200, 400, 500, 700, 800, 900) nach Anspruch 1, ferner umfassend:
eine stromverbrauchende Vorrichtung (106, 206, 406, 506, 706, 806, 906), die dazu konfiguriert ist, einen Betriebsmodus mindestens teilweise auf Grundlage einer von der Energiegewinnungseinrichtung (102, 202, 402, 502, 702, 802, 902) empfangenen Strommenge zu ändern.

6. Energiegewinnungssystem (100, 200, 400, 500, 700, 800, 900) nach Anspruch 1, wobei die Quellen (108, 112, 208a, 208b, 308, 308a, 308b, 408, 412, 508, 708, 808, 812, 908) der Funkfrequenzsignale priorisiert werden, um die Leistungsabgabe an das Energiegewinnungssystem effizient zu maximieren.

7. Verfahren, umfassend:
Empfangen eines oder mehrerer Funkfrequenzsignale von einer Quelle (108, 112, 208a, 208b, 308, 308a, 308b, 408, 412, 508, 708, 808, 812, 908) über eine oder mehrere Antennen (104, 204, 404, 504, 704, 804, 904), die jeweils auf eine bestimmte Frequenz abgestimmt sind;
Extrahieren von Energie aus dem einem oder den mehreren Funkfrequenzsignalen durch eine Energiegewinnungseinrichtung (102, 202, 402, 502, 702, 802, 902); und
Bereitstellen von aus der extrahierten Energie abgeleitetem Strom an einer stromverbrauchenden Vorrichtung (106, 206, 406, 506, 706, 806, 906), die dazu konfiguriert ist, eine oder mehrere Operationen durchzuführen, die nicht mit dem Funkfrequenzsignal verbunden sind, durch die Energiegewinnungseinrichtung (102, 202, 402, 502, 702, 802, 902),
**dadurch gekennzeichnet, dass** die Energiegewinnungseinrichtung (102, 202, 402, 502, 702, 802, 902) Datenkommunikationen nutzt, um die Stromabgabe von der Quelle (108, 112, 208a, 208b, 308, 308a, 308b, 408, 412, 508, 708, 808, 812, 908) des Funkfrequenzsignals auf Grundlage von Anforderungen der stromverbrauchenden Vorrichtung (106, 206, 406, 506, 706, 806, 906) zu steuern.

8. Verfahren nach Anspruch 7, ferner umfassend:
Ändern eines Betriebsmodus mindestens teilweise auf Grundlage des von der Energiegewinnungseinrichtung (102, 202, 402, 502, 702, 802, 902) empfangenen Stroms durch die stromverbrauchende Vorrichtung (106, 206, 406, 506, 706, 806, 906).

## Revendications

1. Système de collecte d'énergie (100, 200, 400, 500, 700, 800, 900), comprenant :
une antenne (104, 204, 404, 504, 704, 804, 904) conçue pour recevoir un signal radiofréquence en provenance d'une source (108, 112, 208a, 208b, 308, 308a, 308b, 408, 412, 508, 708, 808, 812, 908) ; et
un collecteur d'énergie (102, 202, 402, 502, 702, 802, 902) conçu pour recevoir le signal radiofréquence en provenance de l'antenne (104, 204, 404, 504, 704, 804, 904) et fournir une puissance, dérivée de l'énergie dans le signal radiofréquence, à un dispositif à consommation de puissance (106, 206, 406, 506, 706, 806, 906) conçu pour effectuer une ou plusieurs opérations non associées au signal radiofréquence,
**caractérisé par le fait que** le système de collecte d'énergie (100, 200, 400, 500, 700, 800, 900) utilise des communications de données pour commander la fourniture de puissance à partir de la source (108, 112, 208a, 208b, 308, 308a, 308b, 408, 412, 508, 708, 808, 812, 908) du signal radiofréquence sur la base des besoins du dispositif à consommation de puissance (106, 206, 406, 506, 706, 806, 906).

2. Système de collecte d'énergie (100, 200, 400, 500, 700, 800, 900) selon la revendication 1, comprenant en outre :
une pluralité d'antennes (104, 204, 404, 504, 704, 804, 904) chacune accordée sur une fréquence distincte et chacune conçue pour recevoir un signal radiofréquence sensiblement autour de la fréquence distincte,
dans lequel le collecteur d'énergie (102, 202, 402, 502, 702, 802, 902) est en outre conçu pour dériver de l'énergie à partir de chacun des signaux radiofréquence de chacune de la pluralité d'antennes (104, 204, 404, 504, 704, 804, 904).

3. Système de collecte d'énergie (100, 200, 400, 500, 700, 800, 900) selon la revendication 1, dans lequel la source (108, 112, 208a, 208b, 308, 308a, 308b, 408, 412, 508, 708, 808, 812, 908) est un générateur de signal à onde continue alimenté par batterie (812), et dans lequel le dispositif à consommation de puissance (106, 206, 406, 506, 706, 806, 906) est conçu pour envoyer des données pour appliquer un cycle à la puissance du générateur de signal à onde continue alimenté par batterie lorsque le dispositif à consommation de puissance (106, 206, 406, 506, 706, 806, 906) nécessite une puissance supplémentaire.

4. Système de collecte d'énergie (100, 200, 400, 500, 700, 800, 900) selon la revendication 1, dans lequel la source (108, 112, 208a, 208b, 308, 308a, 308b, 408, 412, 508, 708, 808, 812, 908) est un système d'identification radiofréquence réseau à commande de phase (910), et dans lequel le dispositif à consommation de puissance (106, 206, 406, 506, 706, 806, 906) est conçu pour envoyer des données pour ordonner au système d'identification radiofréquence réseau à commande de phase de diriger plus d'énergie vers le système de collecte d'énergie.

5. Système de collecte d'énergie (100, 200, 400, 500, 700, 800, 900) selon la revendication 1, comprenant en outre :
un dispositif à consommation de puissance (106, 206, 406, 506, 706, 806, 906) conçu pour changer de mode opérationnel sur la base au moins en partie d'une quantité de puissance reçue du collecteur d'énergie (102, 202, 402, 502, 702, 802, 902).

6. Système de collecte d'énergie (100, 200, 400, 500, 700, 800, 900) selon la revendication 1, dans lequel les sources (108, 112, 208a, 208b, 308, 308a, 308b, 408, 412, 508, 708, 808, 812, 908) des signaux radiofréquence sont priorisées pour maximiser efficacement la fourniture de puissance au système de collecte d'énergie.

7. Procédé, comprenant :
la réception, via une ou plusieurs antennes (104, 204, 404, 504, 704, 804, 904) accordées chacune sur une fréquence distincte, d'un ou plusieurs signaux radiofréquence en provenance d'une source (108, 112, 208a, 208b, 308, 308a, 308b, 408, 412, 508, 708, 808, 812, 908) ;
l'extraction, par un collecteur d'énergie (102, 202, 402, 502, 702, 802, 902), de l'énergie provenant de l'un ou plusieurs signaux radiofréquence ; et
la fourniture, par le collecteur d'énergie (102, 202, 402, 502, 702, 802, 902), de la puissance dérivée de l'énergie extraite à un dispositif à consommation de puissance (106, 206, 406, 506, 706, 806, 906) conçu pour effectuer une ou plusieurs opérations non associées au signal radiofréquence,
**caractérisé en ce que** le collecteur d'énergie (102, 202, 402, 502, 702, 802, 902) utilise des communications de données pour commander la fourniture de puissance à partir de la source (108, 112, 208a, 208b, 308, 308a, 308b, 408, 412, 508, 708, 808, 812, 908) du signal radiofréquence sur la base des besoins du dispositif à consommation de puissance (106, 206, 406, 506, 706, 806, 906).

8. Procédé selon la revendication 7, comprenant en outre :
le changement, par le dispositif de consommation de puissance (106, 206, 406, 506, 706, 806, 906), d'un mode opérationnel sur la base au moins en partie de la puissance reçue du collecteur d'énergie (102, 202, 402, 502, 702, 802, 902).
